# EUROPEAN PATENT SPECIFICATION

(11) **EP 2 045 102 B1**
(45) Date of publication and mention of the grant of the patent: **04.04.2012**
(21) Application number: 07791201.2
(22) Date of filing: 23.07.2007
(51) Int. Cl.: B60C 5/14, B32B 25/08, C08L 9/00, C08L 21/00, B60C 1/00

(54) **INNER LINER FOR PNEUMATIC TIRE AND PNEUMATIC TIRE**
INNENSCHICHT FÜR LUFTREIFEN UND LUFTREIFEN
REVÊTEMENT INTÉRIEUR POUR PNEUMATIQUE ET PNEUMATIQUE

(30) Priority: 24.07.2006 JP 2006200762; 24.07.2006 JP 2006200895
(43) Date of publication of application: 08.04.2009
(73) Proprietor: Bridgestone Corporation, Tokyo 104-8340 (JP); Kuraray Co., Ltd., Okayama 710-8622 (JP)
(72) Inventor: NOHARA, Daisuke, Tokyo 187-8531 (JP); KATOU, Daisuke, Tokyo 187-8531 (JP); TAKAHASHI, Yuwa, Tokyo 187-8531 (JP); NAKAGAWA, Daisuke, TOKYO 187-8531 (JP); ISOYAMA, Kota, Tokyo 713-8550 (JP); WATANABE, Tomoyuki, Tokyo 713-8550 (JP); IKEDA, Kaoru, Tokyo 713-8550 (JP)
(74) Representative: Whalley, Kevin
(86) International application number: PCT/JP2007/064469
(87) International publication number: WO 2008/013152

(56) References cited:
- EP-A1- 0 774 340
- EP-A1- 1 419 903
- EP-A1- 1 479 725
- WO-A1-2006/059621
- WO-A1-2006/059621
- JP-A- 2001 113 908
- JP-A- 2005 103 760
- US-B1- 6 334 919

## Description

### TECHNICAL FIELD

This invention relates to an innerliner for a pneumatic tire, and a pneumatic tire using the laminated body or the innerliner, and more particularly to an innerliner for a pneumatic tire having excellent gas barrier properties and flex resistance and being capable of decreasing a tire weight while improving internal pressure retainabilities in a new tire product and after the running thereof.

### BACKGROUND ART

Heretofore, a rubber composition using a butyl rubber, a halogenated butyl rubber or the like as a main material is used in an innerliner disposed as an air barrier layer in an inner surface of a tire for retaining an internal tire pressure. However, since such rubber compositions using these butyl-based rubbers as a main material are low in the air barrier properties, when the rubber composition is applied to the innerliner, the thickness of the innerliner is required to be around 1 mm. Therefore, the weight of the innerliner occupied in the tire is about 5%, which is an obstacle when the tire weight is decreased to improve fuel consumption of an automobile.

On the other hand, an ethylene-vinyl alcohol copolymer (hereinafter may be abbreviated as EVOH) is known to be excellent in the gas barrier properties. Since EVOH has an air permeability of not more than one-hundredth of that in the above butyl-based rubber composition for the innerliner, even if the thickness is not more than 100 µm, the internal pressure retainability of the tire can be largely improved but also the tire weight can be decreased.

Although there are existent many resins having an air permeation lower than that of the butyl-based rubber, when the air permeation is about one-tenth of the butyl-based innerliner, the effect of improving the internal pressure retainability is small unless the thickness exceeds 100 µm. While, if the thickness exceeds 100 µm, the effect of decreasing the tire weight is small, and the innerliner is broken cracks are caused in the innerliner due to the bending deformation of the tire, and hence it becomes difficult to retain the barrier properties.

On the contrary, it is possible to use EVOH even at a thickness of not more than 100 µm, so that when it is used, the breakage and cracking are hardly caused by the bending deformation during the rotation of the tire. Therefore, it can be said that it is effective to apply EVOH to the innerliner for the pneumatic tire in order to improve the internal pressure retainability of the tire. For example, JP-A-H06-40207 discloses a pneumatic tire comprising an innerliner made from EVOH.

However, when a normal EVOH is used as an innerliner, the breakage and cracking may be caused by the bending deformation because the normal EVOH is largely high in the elastic modulus as compared with a rubber usually used in the tire though the effect of improving the internal pressure retainability of the tire is large. In case of using the innerliner made from EVOH, therefore, the internal pressure retainability before using the tire is largely improved, but the internal pressure retainability after the used of the tire subjected to the bending deformation during the rotation of the tire may be lowered as compared with that before using. As a means for solving this problem, JP-A-2002-52904 discloses a technique wherein a resin composition comprising 60 to 99% by weight of an ethylene-vinyl alcohol copolymer having an ethylene content of 20 to 70 mol% and a saponification degree of not less than 85% and 1 to 40% by weight of a hydrophobic plasticizer is applied to the innerliner.

Furthermore, JP-A-2004-176048 discloses a technique wherein a modified ethylene-vinyl alcohol copolymer obtained by reacting 1 to 50 parts by weight of an epoxy compound based on 100 parts by weight of an ethylene-vinyl alcohol copolymer having an ethylene content of 25 to 50% by mole is used in the innerliner. The innerliner has a higher flex resistance while retaining the gas barrier properties as comprised with the innerliner for a tire made from the conventional EVOH.

Moreover, the innerliner disclosed in JP-A-2004-176048 is preferable to be used by laminating on an auxiliary layer made from an elastomer through an adhesive layer for improving the internal pressure retainability of the tire.
Innerliners for tires are also disclosed in US 6334919 and EP-A-1419903. Multi-layer or laminate structures are disclosed in EP-A-1479725, WO 2006/059621 and EP-A-0778340

### DISCLOSURE OF THE INVENTION

However, there is still a room for improving the flex resistance of the innerliner even if the technique disclosed in JP-A-2004-176048 is applied.

The inventors have made examinations on a laminated body using a resin film layer containing a thermoplastic resin and a rubbery elastomer layer and found that the adhesion property between the resin film layer containing the thermoplastic resin and the rubbery elastomer layer is generally low. Therefore, when such a laminated body is used as an innerliner, the resin film layer containing the thermoplastic resin becomes easily peeled off from the rubbery elastomer layer. At this moment, there is still a room for improving the peeling resistance of the laminated body since the adhesion property between the resin film layer containing the thermoplastic resin and the rubbery elastomer layer is low even if the technique disclosed in JP-A-2004-176048 is applied.

It is, therefore, an object of the invention to provide a an innerliner for a pneumatic tire having excellent gas barrier properties and flex resistance and being capable of decreasing the tire weight. Further, it is the other object of the invention to provide a pneumatic tire using the innerliner.

The inventors have made various studies and discovered that an innerliner comprising at least a layer of a resin composition in which a soft resin having a Young's modulus at 23°C lower than that of a modified ethylene-vinyl alcohol copolymer is dispersed into a matrix made from the modified ethylene-vinyl alcohol copolymer obtained by reacting an ethylene-vinyl alcohol copolymer has excellent gas barrier properties and flex resistance, and that a tire being excellent in the internal pressure retainabilities in a new tire product and after the running thereof is obtained by disposing the innerliner in the tire, and as a result the invention has been accomplished.

The innerliner for the pneumatic tire according to the invention comprises at least a layer of a resin composition (R) in which a soft resin (Q) having a Young's modulus at 23°C lower than that of a modified ethylene-vinyl alcohol copolymer (P) is dispersed in a matrix made from the modified ethylene-vinyl alcohol copolymer (P) obtained by reacting an ethylene-vinyl alcohol copolymer (O) wherein a Young's modulus at -20°C of the resin composition (R) is not more than 1500 MPa. At this moment, the innerliner for the pneumatic tire according to the invention is required to comprise at least the layer of the resin composition (R) and may further have another layer or may be constituted with only the layer of the resin composition (R). Moreover, the modified ethylene-vinyl alcohol copolymer (P) in the resin composition (R) is existent as a matrix, wherein the matrix means a continuous phase.

In the innerliner for the pneumatic tire according to the invention, the Young's modulus at 23°C of the soft resin (Q) is preferable to be not more than 500 MPa.

In a preferable embodiment of the innerliner for the pneumatic tire of the invention, the soft resin (Q) has a functional group reacting with a hydroxyl group.

In another preferable embodiment of the innerliner for the pneumatic tire of the invention, an ethylene content of the ethylene-vinyl alcohol copolymer (O) is 25 to 50 mol%.

In the other preferable embodiment of the innerliner for the pneumatic tire of the invention, a saponification degree of the ethylene-vinyl alcohol (O) is not less than 90%.

In a further preferable embodiment of the innerliner for the pneumatic tire of the invention, the modified ethylene-vinyl alcohol copolymer (P) is obtained by reacting 1 to 50 parts by mass of an epoxy compound (S) based on 100 parts by mass of the ethylene-vinyl alcohol copolymer (O). At this moment, the epoxy compound (S) is preferable to be glycidol or epoxypropane.

In the other preferable embodiment of the innerliner for the pneumatic tire of the invention, a content of the soft resin (Q) in the resin composition (R) is within a range of 10 to 30% by mass.

In a further preferable embodiment of the innerliner for the pneumatic tire of the invention, an average particle size of the soft resin (Q) is not more than 2 µm.

In another preferable embodiment of the innerliner for the pneumatic tire of the invention, the layer of the resin composition (R) is crosslinked.

In the other preferable embodiment of the innerliner for the pneumatic tire of the invention, the layer of the resin composition (R) has an oxygen permeation coefficient at 20°C and 65% RH of not more than 3.0 × 10⁻¹² cm³·cm/cm²·sec·cmHg.

In a further preferable embodiment of the innerliner for the pneumatic tire of the invention, a thickness of the layer of the resin composition (R) is not more than 100 µm.

In another preferable embodiment of the innerliner for the pneumatic tire of the invention, the innerliner further comprises at least one auxiliary layer (T) made of an elastomer adjacent to the layer of the resin composition (R). At this moment, at least one adhesive layer (U) is preferable to be provided in at least one place between the layer of the resin composition (R) and the auxiliary layer (T) and between the auxiliary layer (T) and the auxiliary layer (T). Also, the auxiliary layer (T) is preferable to have an oxygen permeation coefficient at 20°C and 65% RH of not more than 3.0 × 10⁻⁹ cm³·cm/cm²·sec·cmHg.

When the innerliner for the pneumatic tire according to the invention is provided with at least one auxiliary layer (T) adjacent to the layer made of the resin composition (R), the auxiliary layer (T) is preferable to comprise a butyl rubber and/or a halogenated butyl rubber, a diene-based elastomer, or a thermoplastic urethane-based elastomer.

Also, when the innerliner for the pneumatic tire according to the invention is provided with at least one auxiliary layer (T) adjacent to the layer made of the resin composition (R), a total thickness of the auxiliary layer(s) (T) is preferable to be within a range of 50 to 2000 µm.

The pneumatic tire according to the invention comprises a pair of bead portions, a pair of sidewall portions, a tread portion continuing to both the sidewall portions, a carcass toroidally extending between the pair of bead portions to reinforce these portions and a belt disposed on an outside of a crown portion of the carcass in a radial direction of the tire, wherein the aforementioned innerliner for the pneumatic tire is provided on an inner surface of the tire at the inside of the carcass.

In a preferable embodiment of the pneumatic tire of the invention, the innerliner for the pneumatic tire disposed on the inner surface of the tire at the inside of the carcass is provided with at least one auxiliary layer (T) adjacent to the layer made of the resin composition (R), wherein a portion of the auxiliary layer (T) corresponding to a radially width of at least 30 mm in a region from an end of the belt to the bead portion is thicker by at least 0.2 mm than a portion of the auxiliary layer (T) corresponding to a bottom portion of the belt.

According to the invention, there can be provided an innerliner for a pneumatic tire having excellent gas barrier properties and flex resistance and being capable of decreasing the weight of the tire by using a layer made from a resin composition in which in which a soft resin having a Young's modulus at 23°C lower than that of a modified ethylene-vinyl alcohol copolymer is dispersed into a matrix composed of the modified ethylene-vinyl alcohol copolymer obtained by reacting an ethylene-vinyl alcohol copolymer.

Moreover, there can be provided a pneumatic tire using such an innerliner.

### BRIEF DESCRIPTION OF THE DRAWINGS

FIG. 1 is a partial sectional view of an embodiment of the pneumatic tire according to the invention.

FIG. 2 is an enlarged partial sectional view of another embodiment of the pneumatic tire according to the invention.

FIG. 3 is an enlarged partial sectional view of another embodiment of the pneumatic tire according to the invention.

### BEST MODE FOR CARRYING OUT THE INVENTION

<Innerliner for pneumatic tire>
The innerliner for the pneumatic tire according to the invention will be described in detail below. The innerliner for the pneumatic tire according to the invention is characterized by comprising at least a layer made from a resin composition (R) in which a soft resin (Q) having a Young's modulus at 23°C lower than that of a modified ethylene-vinyl alcohol copolymer (P) is dispersed in a matrix made from the modified ethylene-vinyl alcohol copolymer (P) obtained by reacting an ethylene-vinyl alcohol copolymer (O). The modified ethylene-vinyl alcohol copolymer (P) obtained by reacting the ethylene-vinyl alcohol copolymer (O) with, for example, an epoxy compound (S) is low in the elastic modulus as compared with a usual EVOH. Also, the elastic modulus can be further lowered by dispersing the soft resin (Q) satisfying the above properties. Therefore, in the resin composition (R) formed by dispersing the soft resin (Q) in the matrix of the modified ethylene-vinyl alcohol copolymer (P), the elastic modulus is largely lowered and hence the breakage resistance in the bending is high and the crack is hardly generated.

The ethylene-vinyl alcohol copolymer (O) is preferable to have an ethylene content of 25 to 50 mol%, more preferably 30 to 48 mol%, even preferably 35 to 45 mol%. When the ethylene content is less than 25 mol%, the flex resistance, fatigue resistance and melt shapability may be deteriorated, while when it exceeds 50 mol%, the gas barrier properties cannot be sufficiently ensured. Also, the ethylene-vinyl alcohol copolymer (O) is preferable to have a saponification degree of not less than 90%, more preferably not less than 95%, even preferably not less than 99%. When the saponification degree is less than 90%, the gas barrier properties and the thermal stability during the shaping may be insufficient. Further, the ethylene-vinyl alcohol copolymer (O) is preferable to have a melt flow rate (MFR) at 190°C under a load of 2160 g of 0.1 to 30 g/10 minutes, more preferably 0.3 to 25 g/10 minutes.

In the invention, the method of producing the modified ethylene-vinyl alcohol copolymer (P) is not particularly limited and preferably includes a production method wherein the ethylene-vinyl alcohol copolymer (O) is reacted with the epoxy compound (S) in a solution. In more particular, the modified ethylene-vinyl alcohol copolymer (P) can be produced by adding and reacting the epoxy compound (S) in a solution of the ethylene-vinyl alcohol copolymer (O) in the presence of an acid catalyst or an alkali catalyst, preferably in the presence of the acid catalyst. As a reaction solvent are mentioned aprotic polar solvents such as dimethylsulfoxide, dimethylformamide, dimethylacetamide, N-methylpyrrolidone and the like. As the acid catalyst are mentioned p-toluenesulfonic acid, methanesulfonic acid, trifluoromethanesulfonic acid, sulfuric acid, boron trifluoride and the like. As the alkali catalyst are mentioned sodium hydroxide, potassium hydroxide, lithium hydroxide, sodium methoxide and the like. Moreover, the amount of the catalyst is preferable to be within a range of 0.0001 to 10 parts by mass based on 100 parts by mass of the ethylene-vinyl alcohol copolymer (O).

As the epoxy compound (S) is preferable a monovalent epoxy compound. An epoxy compound having not less than two functionalities is crosslinked with the ethylene-vinyl alcohol copolymer (O) to form a gel, a pimple or the like, which may lower the quality of the innerliner. Among the monovalent epoxy compounds, glycidol and epoxypropane are particularly preferable in view of the production easiness, gas barrier properties, flex resistance and fatigue resistance of the modified ethylene-vinyl alcohol copolymer (P). Also, it is preferable to react 1 to 50 parts by mass, more preferably 2 to 40 parts by mass, even preferably 5 to 35 parts by mass of the epoxy compound (S) based on 100 parts by mass of the ethylene-vinyl alcohol copolymer (O).

The modified ethylene-vinyl alcohol copolymer (P) is preferable to have a melt flow rate (MFR) at 190°C under a load of 2160 g of 0.1 to 30 g/10 minutes, more preferably 0.3 to 25 g/10 minutes, even preferably 0.5 to 20 g/10 minutes in view of obtaining the gas barrier properties, flex resistance and fatigue resistance.

The soft resin (Q) dispersed in the matrix made of the modified ethylene-vinyl alcohol copolymer (P) is required to have a Young's modulus at 23°C lower than that of the modified ethylene-vinyl alcohol copolymer (P), which is preferably not more than 500 MPa. When the Young's modulus at 23°C of the soft resin (Q) is lower than that of the modified ethylene-vinyl alcohol copolymer (P), the elastic modulus of the resin composition (R) can be lowered, and hence the flex resistance can be improved. Also, the soft resin (Q) is preferable to have a functional group reacting with a hydroxyl group. When the soft resin (Q) has the functional group reacting with the hydroxyl group, the soft resin (Q) is evenly dispersed in the modified ethylene-vinyl alcohol copolymer (P). At this moment, as the functional group reacting with the hydroxyl group are mentioned a maleic anhydride residue, a hydroxyl group, a carboxyl group, an amino group and the like. As the soft resin (Q) having such a functional group reacting with hydroxyl group are concretely mentioned a maleic anhydride-modified and hydrogenated styrene-ethylene-butadiene-styrene block copolymer, a maleic anhydride-modified ultralow density polyethylene and the like.

Also, the content of the soft resin (Q) in the resin composition (R) is preferable to be within a range of 10 to 30% by mass. When the content of the soft resin (Q) is less than 10% by mass, the effect of improving the flex resistance is small, while when it exceeds 30% by mass, the gas barrier properties may be lowered. Further, the soft resin (Q) is preferable to have an average particle size of not more than 2 µm. When the average particle size of the soft resin (Q) exceeds 2 µm, the flex resistance of the layer made from the resin composition (R) may not be sufficiently improved, and hence the lowering of the gas barrier properties and furthermore the deterioration of the internal pressure retainability of the tire may be caused. Moreover, the average particle size of the soft resin (Q) in the resin composition (R) is determined, for example, by freezing a sample and cutting the sample with a microtome and then observing by means of a transmission electron microscope (TEM).

The resin composition (R) is preferable to have a Young's modulus at -20°C of not more than 1500 MPa. When the Young's modulus at -20°C is not more than 1500 MPa, the durability when being used in cold region can be improved.

The resin composition (R) can be prepared by milling the modified ethylene-vinyl alcohol copolymer (P) and the soft resin (Q). Also, the resin composition (R) is preferable to be film-like in the production of the innerliner. The layer made from the resin composition (R) is shaped into a film, a sheet or the like at a melting temperature of, preferably, 150 to 270°C by melt shaping, preferably extrusion shaping such as a T-die method, an inflation method or the like, and used as the innerliner.

The layer made from the resin composition (R) is preferable to be crosslinked. When the layer of the resin composition (R) is not crosslinked, the innerliner is seriously deformed at the vulcanization step of the tire and becomes non-uniform and hence the gas barrier properties, flex resistance and fatigue resistance of the innerliner may be deteriorated. As the crosslinking method is preferable a method of irradiating energy rays. As the energy ray are mentioned an ultraviolet ray, an electron beam, an X-ray and an ionizing radiation such as an α-ray, a γ-ray or the like, and among them, the electron beam is particularly preferable. The irradiation of the electron beam is preferable to be conducted after the resin composition (R) is shaped into a film, a sheet or the like. The dose of the electron beam is preferable to be within a range of 10 to 60 Mrad, more preferably within a range of 20 to 50 Mrad. When the dose of the electron beam is less than 10 Mrad, the crosslinking is hardly promoted, while when it exceeds 60 Mrad, the deterioration of the shaped body is easily proceeding.

Also, the layer of the resin composition (R) is preferable to have an oxygen permeation coefficient at 20°C and 65% RH of not more than 3.0 10⁻¹² cm³·cm/cm²·sec·cmHg, more preferably not more than 1.0 × 10⁻¹² cm³·cm/cm²·sec·cmHg, even preferably not more than 5.0 × 10⁻¹³ cm³·cm/cm²·sec·cmHg. When the oxygen permeation coefficient at 20°C and 65% RH× exceeds 3.0 × 10⁻¹² cm³·cm/cm²·sec·cmHg, the layer of the resin composition (R) has to be thickened in order to enhance the internal pressure retainability of the tire when being used as an innerliner, and hence the tire weight cannot be sufficiently decreased.

The thickness of the layer made from the resin composition (R) is preferably not more than 100 µm, and more preferably about 0.1 µm as a lower limit, and further preferably a range of 1 to 40 µm, most preferably a range of 5 to 30 µm. When the thickness of the layer made from the resin composition (R) exceeds 100 µm, the effect of decreasing the weight becomes small as compared with the conventional butyl rubber-based innerliner and also the flex resistance and fatigue resistance are lowered and the breakage and crack are easily caused due to the bending deformation during the rotation of the tire, and the crack is easily grown and hence the internal pressure retainability of the tire may be lowered as compared with one before the use. While when it is less than 0.1 µm, the gas barrier properties may be insufficient and the internal pressure retainability of the tire cannot be sufficiently ensured.

The innerliner for the pneumatic tire according to the invention is preferable to further comprise at least one auxiliary layer (T) made from an elastomer adjacent to the layer made from the resin composition (R). The auxiliary layer (T) is high in the adhesion for the hydroxyl group of the modified ethylene-vinyl alcohol copolymer (P) because of using the elastomer and is hardly peeled out from the layer of the resin composition (R). Therefore, even if the breakage and crack are caused in the layer of the resin composition (R), the crack is hardly grown, and the bad effects such as large breakage and crack and the like are suppressed and the internal pressure retainability of the tire can be sufficiently retained. Also, the innerliner for the pneumatic tire according to the invention may be provided with at least one adhesive layer (U) in at least one place between the layer of the resin composition (R) and the auxiliary layer (T) and between the auxiliary layer (T) and the auxiliary layer (T). Moreover, an adhesive used in the adhesive layer (U) includes a chlorinated rubber-isocyanate based adhesive.

When the innerliner for the pneumatic tire according to the invention is provided with the auxiliary layer (T) and, if necessary, the adhesive layer (U) in addition to the layer made from the resin composition (R), it is formed as a laminated body. As a method of producing the laminated body are mentioned, for example, a method wherein the layer made from the resin composition (R) and other layer(s) are laminated by co-extrusion, a method wherein the layer made from the resin composition (R) and the auxiliary layer (T) are laminated with each other through the adhesive layer (U), if necessary, and a method wherein the layer made from the resin composition (R) and the auxiliary layer (T) are laminated on a drum with, if necessary, the adhesive layer (U) in the building of the tire, and so on.

The auxiliary layer (T) is preferable to have an oxygen permeation coefficient at 20°C and 65% RH of not more than 3.0 × 10⁻⁹ cm³·cm/cm²·sec·cmHg, more preferably not more than 1.0 × 10⁻⁹ cm³·cm/cm²·sec·cmHg. When the oxygen permeation coefficient at 20°C and 65% RH is not more than 3.0 × 10⁻⁹ cm³·cm/cm²·sec·cmHg, the effect of improving the gas barrier properties is sufficiently developed and it is possible to highly maintain the internal pressure retainability of the tire.

As the elastomer used in the auxiliary layer (T) may be preferably mentioned a butyl rubber, a halogenated butyl rubber, a diene-based elastomer and a thermoplastic urethane-based elastomer. In view of the gas barrier properties, the butyl rubber and the halogenated butyl rubber are preferable, and the halogenated butyl rubber is more preferable. Also, the butyl rubber and the diene-based elastomer are preferable in order to suppress the growth when the crack is caused in the layer of the resin composition (R). Further, the thermoplastic urethane-based elastomer is preferable for suppressing the occurrence and growth of the crack while thinning the auxiliary layer (T). Moreover, the auxiliary layers (T) are capable of being laminated, and it is particularly preferable that auxiliary layers (T) made from elastomers having various characteristics are multilayered. These elastomers may be used alone or in a combination of two or more.

As the diene-based elastomer are concretely mentioned a natural rubber (NR), an isoprene rubber (IR), a butadiene rubber (BR), a styrene-butadiene copolymer rubber (SBR), an acrylonitrile-butadiene rubber (NBR), a chloroprene rubber (CR) and the like. Among them, the natural rubber and butadiene rubber are preferable. These diene-based elastomers may be used alone or in a blend of two or more.

The thermoplastic urethane-based elastomer is obtained by the reaction of polyol, an isocyanate compound and a short-chain diol. The polyol and the short-chain diol form a straight-chain polyurethane by an addition reaction with the isocyanate compound. The polyol forms a flexible portion, and the isocyanate compound and the short-chain diol become a rigid portion in the thermoplastic urethane-based elastomer. Moreover, the properties of the thermoplastic urethane-based elastomer can be varied over a wide range by changing a kind of a starting material, a compounding amount, polymerization conditions and so on.

The total thickness of the auxiliary layer(s) (T) is preferably within a range of 50 to 2000 µm, more preferably within a range of 100 to 1000 µm, even preferably within a range of 300 to 800 µm. When the total thickness of the auxiliary layer(s) (T) is less than 50 µm, the reinforcing effect is not sufficiently developed and hence it is difficult to suppress the bad effects when the breakage and crack are caused in the layer of the resin composition (R), and the internal pressure retainability of the tire may not be sufficiently maintained. While when the total thickness of the auxiliary layer(s) (T) exceeds 2000 µm, the effect of decreasing the tire weight becomes small.

The auxiliary layer (T) is preferable to have a tensile stress at 300% elongation of not more than 10 MPa, more preferably not more than 8 MPa, even preferably not more than 7 MPa. When the tensile stress exceeds 10 MPa, the flex resistance and the fatigue resistance may be lowered if the auxiliary layer (T) is used in the innerliner.

<Pneumatic tire>

The pneumatic tire according to the invention is characterized by using the above-mentioned innerliner for the pneumatic tire. In the tire comprising the innerliner for the pneumatic tire, the internal pressure retainabilities as a new product and after the running are largely improved.

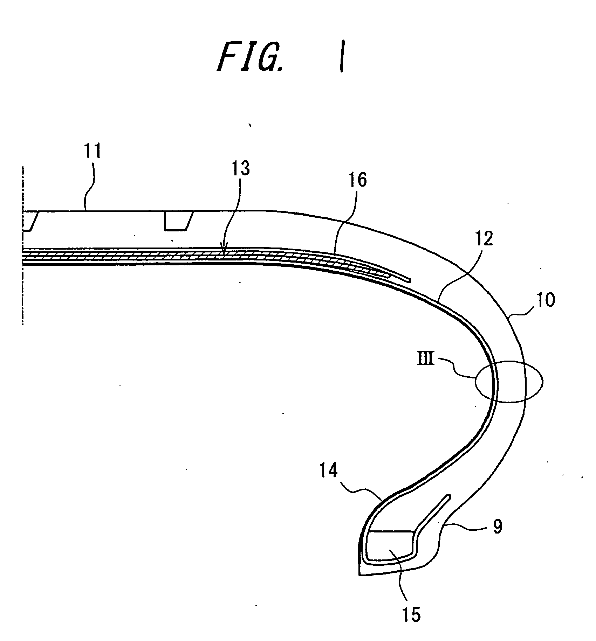

The pneumatic tire according to the invention will be described in detail with reference to the accompanying drawings. FIG. 1 is a partial section view of an embodiment of the pneumatic tire according to the invention. The tire shown in FIG. 1 comprises a pair of bead portions 9, a pair of sidewall portions 10, a tread portion 11 continuing to both the sidewall portions 10, a carcass 12 toroidally extending between the pair of the bead portions 9 to reinforce these portions 9, 10, 11, and a belt 13 disposed on an outside of a crown portion of the carcass 12 in a radial direction of the tire and comprised of two belt layers, and further includes an innerliner 14 disposed on an inner face of the tire inside the carcass 12.

In the tire of the illustrated embodiment, the carcass 12 is composed of a main body portion toroidally extending between a pair of bead cores 15 embedded in the respective bead portions 9 and a turnup portion wound around each bead core 15 from an inside to an outside in a widthwise direction of the tire outward in the radial direction. In the pneumatic tire according to the invention, the ply number and structure of the carcass 12 are not limited thereto.

The belt 13 in the illustrated tire is comprised of two belt layers, but the number of the belt layers constituting the belt 13 is not limited thereto in the tire according to the invention. At this moment, the belt layer is usually a rubberized layer of cords each extending obliquely with respect to an equatorial plane of the tire, and the belt 13 is constructed by laminating the two belt layers so as to cross the cords of the belt layers with each other with respect to the equatorial plane. Moreover, the illustrated tire is provided with a belt reinforcing layer 16 disposed on an outside of the belt 13 in the radial direction of the tire so as to cover the whole of the belt 13. However, the tire according to the invention may not be provided with the belt reinforcing layer 16, or may be provided with a belt reinforcing layer of another structure. At this moment, the belt reinforcing layer 16 is usually a rubberized layer of cords arranged substantially in parallel with respect to the circumferential direction of the tire. Moreover, the pneumatic tire according to the invention may be further provided with a well-known tire member such as a bead filler, a rim guard or the like, if necessary.

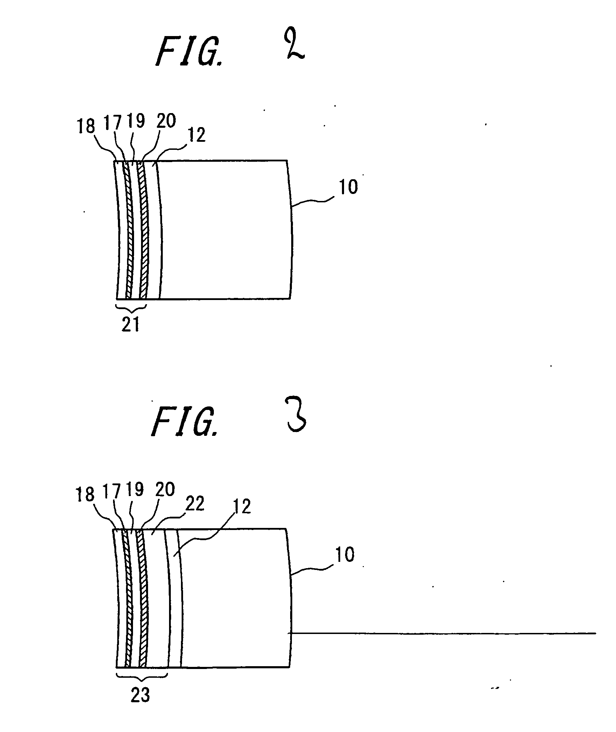

In the pneumatic tire according to the invention, the above innerliner for the pneumatic tire is applied to the innerliner 14. At this moment, the innerliner for the pneumatic tire may have only one layer made from the resin composition (R) or may have at least one auxiliary layer (T) as shown in the FIGS. 2 and 3 in order to improve the flex resistance of the layer made from the resin composition (R).

FIGS. 2 and 3 are an enlarged partial sectional view of another embodiment of the pneumatic tire according to the invention corresponding to an area III surrounded by a frame of FIG. 1, respectively. The tire shown in FIG. 2 is provided with an innerliner 21 comprised of a layer 17 made from a resin composition (R), two auxiliary layers (T) 18 and 19 disposed adjacent to the layer 17 of the resin composition (R), and an adhesive layer (U) 20 disposed on an outside of the auxiliary layer (T) 19 instead of the innerliner 14 shown in FIG. 1. Also, the tire shown in FIG. 3 is provided with an innerliner 23 having further an auxiliary layer (T) 22 on an outside of the adhesive layer (U) 20 shown in FIG. 2. In the tire according to the invention, the number of the auxiliary layers (T) constituting the innerliner is not limited thereto. As the elastomer used in the auxiliary layer (T) are mentioned a butyl rubber, a halogenated butyl rubber, a diene-based elastomer, a thermoplastic urethane-based elastomer and the like, which can be properly selected in accordance with use purpose. Moreover, the tires shown in FIGS. 2 and 3 are provided with one adhesive layer (U) 20 outside the auxiliary layer (T) 19, but the second pneumatic tire according to the invention may not be provided with the adhesive layer (U) 22 or may be provided with at least one layer between the other layers.

As the total thickness of the auxiliary layer (T) in the second pneumatic tire according to the invention, it is preferable that a portion of the auxiliary layer (T) corresponding to a radially width of at least 30 mm in a region from an end of the belt 13 to the bead portion 9 is thicker by at least 0.2 mm than a portion of the auxiliary layer (T) corresponding to a bottom portion of the belt 13. This is due to the fact that the region from the belt end to the bead portion is a severest strain region easily causing the crack and hence it is effective to thicken the auxiliary layer (T) in this specific region in order to improve the durability of such a region.

The pneumatic tire according to the invention can be produced according to the usual method by applying the above-mentioned resin composition (R) and, possibly, the auxiliary layer (T) and the adhesive layer (U) to the innerliner. In the pneumatic tires according to the invention, as a gas filled into the tire can be used usual air or air having a regulated partial oxygen pressure but also inert gases such as nitrogen and so on.

«EXAMPLE»
The following examples are given in illustration of the invention and are not intended as limitations thereof.

(Synthesis Example 1 of modified ethylene-vinyl alcohol copolymer (P))
Into a pressure reaction tank are charged 2 parts by mass of ethylene-vinyl alcohol copolymer having an ethylene content of 44 mol% and a saponification degree of 99.9% (MFR at 190°C under a load of 2160 g: 5.5 g/10 minutes) and 8 parts by mass of N-methyl-2-pyrrolidone, which are stirred under heating at 120°C for 2 hours to completely dissolve ethylene-vinyl alcohol copolymer. The resulting solution is added with 0.4 part by mass of epoxypropane as an epoxy compound and heated at 160°C for 4 hours. After the completion of the heating, the reaction mass is precipitated into 100 parts by mass of a distilled water, and N-methyl-2-pyrrolidone and an unreacted epoxypropane are washed out with a large quantity of a distilled water to obtain a modified ethylene-vinyl alcohol copolymer. Then, the thus modified ethylene-vinyl alcohol copolymer is finely pulverized to a particle size of about 2 mm in a grinder and again washed with a large quantity of a distilled water sufficiently. After the washing, the particles are dried at room temperature under vacuum for 8 hours and melted at 200°C in a biaxial extruder to obtain pellets. The resulting modified ethylene-vinyl alcohol copolymer has a Young's modulus at 23°C of 1300 MPa. At this moment, the Young's modulus at 23°C of the modified ethylene-vinyl alcohol copolymer is measured according to the following method.

(1) Measurement of Young's modulus at 23°C
   The pellets are used in a biaxial extruder manufactured by Toyo Seiki Co., Ltd. under the following extruding conditions to prepare a single layer film of 20 µm in thickness. Then, the film is used to produce a strip specimen of 15 mm in width, which is left to stand in a constant temperature room under conditions of 23°C and 50% RH for 1 week and thereafter S-S curve (stress-strain curve) at 23°C and 50% RH is measured by using an auto-graph [AG-A500 Model] manufactured by Shimadzu Corporation under conditions that a distance between chucks is 50 mm and a tensile rate is 50 mm/minute to determine a Young's modulus from an initial slope of the S-S curve.

Screw: 20 mm φ, full flight
Temperatures set in cylinders and die: C1/C2/C3/die = 200/200/200/200 (°C)

The ethylene content and the saponification degree of the ethylene-vinyl alcohol copolymer are values calculated from a spectrum obtained by ¹H-NMR measurement [using "JNM-GX-500 Model" manufactured by JEOL Ltd.] using a deuterated dimethyl sulfoxide as a solvent. Also, the melt flow rate (MFR) of the ethylene-vinyl alcohol copolymer is determined from a resin amount extruded per unit time (g/10 minutes) by filling a sample into a cylinder having an inner diameter of 9.55 mm and a length of 162 mm in Melt Indexer L244 [manufactured by Takara Kogyo K. K.], melting at 190°C, and then evenly applying a load with a plunger having a weight of 2160 g and a diameter of 9.48 mm to extrude through an orifice having a diameter of 2.1 mm located at the center of the cylinder. However, when the melting point of the ethylene-vinyl alcohol copolymer is around 190°C or exceeds 190°C, the melt flow rate (MFR) is represented as a value calculated by measuring at plural temperatures above the melting point under a load of 2160 g and plotting reciprocals of the absolute temperature on the abscissa and logarithms of MFR on the ordinate in a semi-logarithmic graph and extrapolating into 190°C.

(Synthesis Example 2 of modified ethylene-vinyl alcohol copolymer (P))
A modified ethylene-vinyl alcohol copolymer is synthesized to obtain pellets in the same manner as in Synthesis Example 1 except that an ethylene-vinyl alcohol copolymer having an ethylene content of 32 mol% and a saponification degree of 99.9% (MFR at 190°C under a load of 2160 g: 7.0 g/10 minutes) is used instead of the ethylene-vinyl alcohol copolymer having an ethylene content of 44 mol% and a saponification degree of 99.9% (MFR at 190°C under a load of 2160 g: 5.5 g/10 minutes). The resulting modified ethylene-vinyl alcohol copolymer has a Young's modulus at 23°C of 1700 MPa.

(Synthesis Example 3 of soft resin (Q))
A maleic anhydride-modified and hydrogenated styrene-ethylene-butadiene-styrene block copolymer is synthesized according to the well-known method to obtain pellets. The resulting maleic anhydride-modified and hydrogenated styrene-ethylene-butadiene-styrene block copolymer has a Young's modulus at 23°C of 3 MPa, a styrene content of 20% and a maleic anhydride amount of 0.3 meq/g. Moreover, the Young's modulus is measured in the same method as in Synthesis Example 1.

(Synthesis Example 4 of soft resins (Q))
A maleic anhydride-modified ultralow density polyethylene is synthesized according to the well-known method to obtain pellets. The resulting maleic anhydride-modified ultralow density polyethylene has a Young's modulus at 23°C of 40 MPa and a maleic anhydride amount of 0.04 meq/g.

<Innerliner for pneumatic tire and tire using the same>
(Production of films 1-1 to 1-8)
A resin composition (R) having a compounding recipe as shown in Table 3 is obtained by milling the modified ethylene-vinyl alcohol copolymer (P) obtained in Synthesis Examples 1 and 2 and the soft resin (Q) obtained in Synthesis Examples 3 and 4 with a biaxial extruder. The average particle size of the soft resin (Q) in the resin composition (R) is measured by a transmission electron microscope after a sample of the resulting resin composition (R) is frozen and cut into pieces with a microtome. The Young's modulus at -20°C of the resin composition (R) is measured in the same manner as the above method of measuring Young's modulus except that the set temperature is changed to -20°C. The results are shown in Table 1. Then, the resulting resin composition (R) and a thermoplastic polyurethane (TPU) [KRAMIRON 3190 manufactured by Kuraray Co., Ltd.] are used to prepare three-layer films 1-1 to 1-8 (thermoplastic polyurethane layer/resin composition (R) layer/thermoplastic polyurethane layer) with a two-type and three-layer coextruding apparatus under the following coextrusion conditions. The thickness of each layer used in each film is shown in Table 1. Moreover, in the films 1-7 and 1-8, only a modified EVOH (P) is used instead of the resin composition (R).

Each extruding temperature of resins: C1/C2/C3/die = 170/170/200/200°C
Specification of extruder for each resin:
Thermoplastic polyurethane: 25 mm φ extruder P25-18AC [manufactured by Ohsaka Seiki Kosaku Co., Ltd.]
Resin composition (R) or modified EVOH (P): 20 mm φ extruder laboratory machine ME model CO-EXT [manufactured by Toyo Seiki Co., Ltd.]
Specification of T-die: for two-type and three-layer of 500 mm in width [manufactured by Plastic Engineering Laboratory Co., Ltd.]
Temperature of cooling roll: 50°C
Pick-up rate: 4 m/min

The oxygen permeation coefficient and flex resistance of the films obtained as mentioned above are evaluated according to the following methods. The results are shown in Table 1.

(5) Measurement of oxygen permeation coefficient
   Each film is conditioned at 20°C and 65% RH for 5 days. The two conditioned films are used and their oxygen permeation coefficients are measured with MOCON OX-TRAN 2/20 Model manufactured by Modern Control Inc. according to JIS K7126 (Equal Pressure Method) under conditions of 20°C and 65% RH, from which an average value is calculated. Moreover, the oxygen permeation coefficient of each layer forming the film is calculated in the same manner (the result is shown in Table 1).

(6) Evaluation of flex resistance
   Fifty cut films of 21 cm × 30 cm are prepared and conditioned at 0°C for 7 days. Then, these films are bended at bending numbers of 50 times, 75 times, 100 times, 125 times, 150 times, 175 times, 200 times, 225 times, 250 times, 300 times, 400 times, 500 times, 600 times, 700 times, 800 times, 1000 times, or 1500 times using a Gelbo Flex Tester manufactured by Rigaku Industrial Corporation according to ASTM F 392-74 to measure the number of pinholes. The measurement is conducted five times at the each bending number and the average value thereof is considered as the number of pinholes. The measured results are plotted with the bending number (P) as abscissa and the number of pinholes (N) as ordinate, from which the bending number (Npl) at one pinhole is determined by extrapolation. It is noted that for a film observing no pinhole at the bending of 1500 times, the observation is repeated every additional bending of 500 times and the bending number observing a pinhole is used as Np1.

**Table 1**

| | Resin composition (R) | | | | Oxygen permeation coefficient [cm³·cm/cm²·sec·cmHg] | | Thickness of each layer *19 [µm] | Oxygen permeation coefficient [cm³/cm²·sec·cmHg] | Flex resistance (Np1) [bending number] |
|---|---|---|---|---|---|---|---|---|---|
| | Composition | Amount compounded [% by mass] | Average particule size [µm] | Young's modulus at -20°C [MPa] | Resin composition (R) layer | TPU layer | | Three-layer film | |
| Film 1-1 | Synthesis 1 | 80 | - | 750 | 9.3×10⁻¹³ | 4.6×10⁻¹¹ | 20/20/20 | 9.1×10⁻¹³ | 500 |
| | Synthesis 3 | 20 | 1.2 | | | | | | |
| Film 1-2 | Synthesis 1 | 80 | - | 760 | 9.3×10⁻¹³ | 4.6×10⁻¹¹ | 20/20/20 | 9.1×10⁻¹³ | 500 |
| | Synthesis 4 | 20 | 1.2 | | | | | | |
| Film 1-3 | Synthesis 2 | 80 | - | 1160 | 3.1×10⁻¹³ | 4.6×10⁻¹¹ | 20/20/20 | 3.1×10⁻¹³ | 400 |
| | Synthesis 3 | 20 | 0.7 | | | | | | |
| Film 1-4 | Synthesis 2 | 80 | - | 1170 | 3.1×10⁻¹³ | 4.6×10⁻¹¹ | 20/20/20 | 3.1×10⁻¹³ | 400 |
| | Synthesis 4 | 20 | 1.0 | | | | | | |
| Film 1-5 | Synthesis 2 | 80 | - | 1160 | 8.8×10⁻¹³ | 4.6×10⁻¹¹ | 40/12/40 | 5.2×10⁻¹³ | 700 |
| | Synthesis 3 | 20 | 0.7 | | | | | | |
| Film 1-6 | Synthesis 2 | 80 | - | 1170 | 8.8×10⁻¹³ | 4.6×10⁻¹¹ | 40/12/40 | 5.2×10⁻¹³ | 700 |
| | Synthesis 4 | 20 | 1.0 | | | | | | |
| Film 1-7 | Synthesis 1 | 100 | - | 940 | 6.2×10⁻¹³ | 4.6×10⁻¹¹ | 20/20/20 | 6.1×10⁻¹³ | 100 |
| Film 1-8 | Synthesis 2 | 100 | - | 1450 | 2.7×10⁻¹³ | 4.6×10⁻¹¹ | 20/20/20 | 2.7×10⁻¹³ | 50 |

*19 TPU layer/resin composition (R) layer/TPU layer

As seen from Table 1, the films (films 1-1 to 1-6) using the layer made from the resin composition (R) wherein the soft resin (Q) is dispersed in a matrix made from the modified ethylene-vinyl alcohol copolymer (P) are very excellent in the flex resistance as compared with the films (films 1-7 and 1-8) using the layer made from the modified ethylene-vinyl alcohol copolymer (P).

(Examples 2-1, 2-3 to 2-7 and Comparative Examples 2-2 and 2-3)
Each of the films 1-1 to 1-6 is subjected to a crosslinking treatment by an electron beam irradiation with an electron beam irradiation machine "Curetron for industrial production EBC200-100" manufactured by Nissin High Voltage Co., Ltd. under conditions that an acceleration voltage is 200 kV and an irradiation energy is 30 Mrad. To one-side surface of the resulting crosslinked film is applied Metalock R30M manufactured by Toyo Kagaku Laboratory as an adhesive layer (U), which is laminated as an auxiliary layer (T) on an inner surface of a rubber composition layer of 500 µm in thickness to produce an innerliner. The resulting innerliner is used to prepare a pneumatic tire for a passenger car having a structure shown in FIG. 3 and a tire size of 195/65R15 according to the usual method. The kind of the film used is shown in Table 2. In the rubber composition layer of 500 µm in thickness is used a rubber composition prepared by compounding 60 parts by mass of carbon black GPF [#55 manufactured by Asahi Carbon Co., Ltd.], 7 parts by mass of SUNPAR 2280 [manufactured by Japan Sun Oil Co., Ltd.], 1 part by mass of stearic acid [manufactured by Asahi Denka Industrial Co., Ltd.], 1.3 parts by mass of NOCCELER DM [manufactured by Ouchi Shinko Chemical Industrial Co., Ltd.], 3 parts by mass of zinc oxide [manufactured by Hakusui Chemical Industries, Ltd.] and 0.5 part by mass of sulfur [manufactured by Karuizawa Refinery Co.] based on 30 parts by mass of natural rubber and 70 parts by mass of a brominated butyl rubber [Bromobutyl 2244 manufactured by JSR Corporation]. The rubber composition layer has a tensile stress at 300% elongation of 6.5 MPa and an oxygen permeation coefficient of 6.0 × 10⁻¹⁰ cm³·cm/cm²·sec·cmHg. At this moment, the tensile stress at 300% elongation is measured according to JIS K6251-1993, and the oxygen permeation coefficient is measured in the same manner as described above.

(Example 2-2)
A pneumatic tire for a passenger car is prepared in the same manner as in Example 2-1 except that the thickness of the rubber composition layer is changed to 1000 µm. The rubber composition layer has an oxygen permeation coefficient of 9.0 × 10⁻¹⁰ cm³·cm/cm²·sec·cmHg.

(Example 2-8)
A pneumatic tire for a passenger car having a structure shown in FIG. 2 is prepared in the same manner as in Example 2-1 except that the rubber composition layer is not used.

(Comparative Example 2-1)
A rubber composition is prepared by compounding 60 parts by mass of carbon black GPF [#55 manufactured by Asahi Carbon Co., Ltd.], 7 parts by mass of SUNPAR 2280 [manufactured by Japan Sun Oil Co., Ltd.], 1 part by mass of stearic acid [manufactured by Asahi Denka Industrial Co., Ltd.], 1.3 parts by mass of NOCCELER DM [manufactured by Ouchi Shinko Chemical Industrial Co., Ltd.], 3 parts by mass of zinc oxide [manufactured by Hakusui Chemical Industries, Ltd.] and 0.5 part by mass of sulfur [manufactured by Karuizawa Refinery Co.] based on 100 parts by mass of a brominated butyl rubber [Bromobutyl 2244 manufactured by JSR Corporation], which is used to produce an innerliner of 1500 µm in thickness, and a pneumatic tire for a passenger car is produced by using the innerliner in the same manner as the above example. The innerliner has a tensile stress at 300% elongation of 6.0 MPa and an oxygen permeation coefficient of 3.0 × 10⁻¹⁰ cm³·cm/cm²·sec·cmHg.

The tire obtained as described above is run over 10,000 km on a drum rotating at a revolution number corresponding to a speed of 80 km/h under an air pressure of 140 kPa while being pressed under a load of 6kN. The internal pressure retainability is evaluated by using a tire before running and a tire after running as described below. The internal pressure retainability is evaluated by measuring an internal pressure after three months when a test tire is mounted on a rim of 6JJ × 15 and then inflated under an internal pressure of 240 kPa and represented by an index according to the following equation:
Internal pressure retainability = [(240-b)/(240-a)]×100 (index) In the equation, a is an internal pressure (kPa) after 3 months of the test tire and b is an internal pressure (kPa) after 3 months of a tire before running described in Comparative Example 2-1.

Also, the appearance of the innerliner in the tire after the running on the drum is visually observed to evaluate the presence or absence of cracks. The results are shown in Table 2.

**Table 2**

| | | Example 2-1 | Example 2-2 | Example 2-3 | Example 2-4 | Example 2-5 | Example 2-6 | Example 2-7 | Example 2-8 | Comparative Example 2-1 | Comparative Example 2-2 | Comparative Example 2-3 |
|---|---|---|---|---|---|---|---|---|---|---|---|---|
| Kind of film | | Film 1-1 | Film 1-1 | Film 1-2 | Film 1-3 | Film 1-4 | Film 1-5 | Film 1-6 | Film 1-1 | No films | Film 1-7 | Film 1-8 |
| Thickness of rubber composition layer [µm] *20 | | 500 | 1000 | 500 | 500 | 500 | 500 | 500 | none | 1500 | 500 | 500 |
| Internal pressure retainability | Before running [index] | 430 | 490 | 430 | 1270 | 1270 | 750 | 750 | 380 | 100 | 640 | 1450 |
| | After running [index] | 430 | 490 | 430 | 1270 | 1270 | 750 | 750 | 360 | 100 | 150 | 334 |
| Appearance after running | | No crack | No crack | No crack | No crack | No crack | No crack | No crack | No crack | No crack | Cracks | Cracks |

*20 The thickness of the innerliner is shown in Comparative Example 2-1.

As seen from Table 2, the example tires largely improve the internal pressure retainability before and after the running as compared with the tire of Comparative Example 2-1 and do not show the occurrence of cracks after the running. On the other hand, the tires of Comparative Examples 2-2 and 2-3 are high in the internal pressure retainability before running but cannot retain the internal pressure retainability because cracks are caused in the tires after the running. Also, the rubber composition layer in the example tires is thinner than the thickness of the innerliner in Comparative Example 2-1, so that the tire weight can be reduced.

## Claims

1. An innerliner for a pneumatic tire comprising at least a layer of a resin composition (R) in which a soft resin (Q) having a Young's modulus at 23°C slower than that of a modified ethylene-vinyl alcohol copolymer (P) is dispersed in a matrix made from the modified ethylene-vinyl alcohol copolymer (P) obtained by reacting an ethylene-vinyl alcohol copolymer (O), wherein a Young's modulus at -20°C of the resin composition (R) is not more than 1500 MPa.

2. An innerliner for a pneumatic tire according to claim 1, wherein the Young's modulus at 23°C of the soft resin (Q) is not more than 500 MPa.

3. An innerliner for a pneumatic tire according to claim 1, wherein the soft resin (Q) has a functional group reacting with a hydroxyl group.

4. An innerliner for a pneumatic tire according to claim 1, wherein an ethylene content of the ethylene-vinyl alcohol copolymer (O) is 25 to 50 mol%.

5. An innerliner for a pneumatic tire according to claim 1, wherein a saponification degree of the ethylene-vinyl alcohol (O) is not less than 90%.

6. An innerliner for a pneumatic tire according to claim 1, wherein the modified ethylene-vinyl alcohol copolymer (P) is obtained by reacting 1 to 50 parts by mass of an epoxy compound (S) based on 100 parts by mass of the ethylene-vinyl alcohol copolymer (O).

7. An innerliner for a pneumatic tire according to claim 6, wherein the epoxy compound (S) is glycidol or epoxypropane.

8. An innerliner for a pneumatic tire according to claim 1,
wherein a content of the soft resin (Q) in the resin composition (R) is within a range of 10 to 30% by mass.

9. An innerliner for a pneumatic tire according to claim 1, wherein an average particle size of the soft resin (Q) is not more than 2 µm.

10. An innerliner for a pneumatic tire according to claim 1, wherein the layer of the resin composition (R) is crosslinked.

11. An innerliner for a pneumatic tire according to claim 1, wherein the layer of the resin composition (R) has an oxygen permeation coefficient at 20°C and 65% RH of not more than 3.0 × 10⁻¹² cm³·cm/cm²·sec·cmHg.

12. An innerliner for a pneumatic tire according to claim 1, wherein a thickness of the layer of the resin composition (R) is not more than 100 µm.

13. An innerliner for a pneumatic tire according to claim 1, which further comprises at least one auxiliary layer (T) made of an elastomer adjacent to the layer of the resin composition (R).

14. An innerliner for a pneumatic tire according to claim 13,
wherein at least one adhesive layer (U) is provided in at least one place between the layer of the resin composition (R) and the auxiliary layer (T) and between the auxiliary layer (T) and the auxiliary layer (T).

15. An innerliner for a pneumatic tire according to claim 13,
wherein the auxiliary layer (T) has an oxygen permeation coefficient at 20°C and 65% RH of not more than 3.0 × 10⁻⁹ cm³·cm/cm²·sec·cmHg.

16. An innerliner for a pneumatic tire according to claim 13,
wherein the auxiliary layer (T) comprises a butyl rubber and/or a halogenated butyl rubber.

17. An innerliner for a pneumatic tire according to claim 13,
wherein the auxiliary layer (T) comprises a diene-based elastomer.

18. An innerliner for a pneumatic tire according to claim 13,
wherein the auxiliary layer (T) comprises a thermoplastic urethane-based elastomer.

19. An innerliner for a pneumatic tire according to claim 13,
wherein a total thickness of the auxiliary layer(s) (T) is within a range of 50 to 2000 µm.

20. A pneumatic tire comprising a pair of bead portions, a pair of sidewall portions, a tread portion continuing to both the sidewall portions, a carcass toroidally extending between the pair of bead portions to reinforce these portions and a belt disposed on an outside of a crown portion of the carcass in a radial direction of the tire, wherein an innerliner for a pneumatic tire as claimed in any one of claims 1 to 19 is provided on an inner surface of the tire at an inside of the carcass.

21. A pneumatic tire according to claim 20, which comprises an innerliner for a tire as claimed in any one of claims 13 to 19 disposed on the inner surface of the tire at the inside of the carcass, wherein a portion of the auxiliary layer (T) corresponding to a radially width of at least 30 mm in a region from an end of the belt to the bead portion is thicker by at least 0.2 mm than a portion of the auxiliary layer (T) corresponding to a bottom portion of the belt.

## Patentansprüche

1. Innenschicht für einen Luftreifen, umfassend wenigstens eine Schicht aus einer Harzzusammensetzung (R), in der ein weiches Harz (Q) mit einem Youngschen Modul bei 23°C, der geringer ist als der eines modifizierten Ethylen-Vinylalkohol-Copolymers (P), in einer Matrix bestehend aus dem durch Reagieren eines Ethylen-Vinylalkohol-Copolymers (O) erhaltenen modifizierten Ethylen-Vinylalkohol-Copolymer (P) dispergiert ist, wobei ein Youngscher Modul bei -20°C der Harzzusammensetzung (R) maximal 1500 MPa beträgt.

2. Innenschicht für einen Luftreifen nach Anspruch 1, wobei der Youngscher Modul bei 23°C des weichen Harzes (Q) maximal 500 MPa beträgt.

3. Innenschicht für einen Luftreifen nach Anspruch 1, wobei das weiche Harz (Q) eine mit einer Hydroxylgruppe reagierende funktionelle Gruppe hat.

4. Innenschicht für einen Luftreifen nach Anspruch 1, wobei ein Ethylengehalt des Ethylen-Vinylalkohol-Copolymers (O) 25 bis 50 Mol-% beträgt.

5. Innenschicht für einen Luftreifen nach Anspruch 1, wobei ein Verseifungsgrad des Ethylen-Vinylalkohols (O) mindestens 90 % beträgt.

6. Innenschicht für einen Luftreifen nach Anspruch 1, wobei das modifizierte Ethylen-Vinylalkohol-Copolymer (P) durch Reagieren von 1 bis 50 Masseteilen einer Epoxidverbindung (S) auf der Basis von 100 Masseteilen des Ethylen-Vinylalkohol-Copolymers (P) erhalten wird.

7. Innenschicht für einen Luftreifen nach Anspruch 6, wobei die Epoxidverbindung (S) Glycidol oder Epoxypropan ist.

8. Innenschicht für einen Luftreifen nach Anspruch 1, wobei ein Gehalt des weichen Harzes (Q) in der Harzzusammensetzung (R) in einem Bereich von 10 bis 30 Masse-% liegt.

9. Innenschicht für einen Luftreifen nach Anspruch 1, wobei eine durchschnittliche Partikelgröße des weichen Harzes (Q) maximal 2 µm beträgt.

10. Innenschicht für einen Luftreifen nach Anspruch 1, wobei die Schicht der Harzzusammensetzung (R) vernetzt ist.

11. Innenschicht für einen Luftreifen nach Anspruch 1, wobei die Schicht der Harzzusammensetzung (R) einen Sauerstoffpermeationskoeffizienten bei 20°C und 65 % relativer Feuchte von maximal 3,0 x 10⁻¹² cm³·cm/cm²·sec·cmHG hat.

12. Innenschicht für einen Luftreifen nach Anspruch 1, wobei eine Dicke der Schicht der Harzzusammensetzung (R) maximal 100 µm beträgt.

13. Innenschicht für einen Luftreifen nach Anspruch 1, die ferner wenigstens eine Zusatzschicht (T) aus einem Elastomer neben der Schicht der Harzzusammensetzung (R) umfasst.

14. Innenschicht für einen Luftreifen nach Anspruch 13, wobei wenigstens eine Klebstoffschicht (U) an wenigstens einer Stelle zwischen der Schicht der Harzzusammensetzung (R) und der Zusatzschicht (T) und zwischen der Zusatzschicht (T) und der Zusatzschicht (T) vorgesehen ist.

15. Innenschicht für einen Luftreifen nach Anspruch 13, wobei die Zusatzschicht (T) einen Sauerstoffpermeationskoeffizienten bei 20°C und 65 % relativer Feuchte von maximal 3,0 x 10⁻⁹ cm³·cm/cm²·sec·cmHG hat.

16. Innenschicht für einen Luftreifen nach Anspruch 13, wobei die Zusatzschicht (T) einen Butylkautschuk und/oder einen halogenierten Butylkautschuk umfasst.

17. Innenschicht für einen Luftreifen nach Anspruch 13, wobei die Zusatzschicht (T) ein Elastomer auf Dienbasis umfasst.

18. Innenschicht für einen Luftreifen nach Anspruch 13, wobei die Zusatzschicht (T) ein thermoplastisches Elastomer auf Urethanbasis umfasst.

19. Innenschicht für einen Luftreifen nach Anspruch 13, wobei eine Gesamtdicke der Zusatzschicht(en) (T) in einem Bereich von 50 bis 2000 µm liegt.

20. Luftreifen, der ein Paar Wulstabschnitte, ein Paar Seitenwandabschnitte, einen Laufflächenabschnitt, der bis zu den beiden Seitenwandabschnitten verläuft, eine Karkasse, die toroidal zwischen dem Paar Wulstabschnitten verläuft, um diese Abschnitte zu verstärken, und einen auf einer Außenseite eines Kronenabschnitts der Karkasse in einer radialen Richtung des Reifens angeordneten Gürtel umfasst, wobei eine Innenschicht für einen Luftreifen nach einem der Ansprüche 1 bis 19 auf einer Innenfläche des Reifens auf einer Innenseite der Karkasse vorgesehen ist.

21. Luftreifen nach Anspruch 20, der eine Innenschicht für einen Reifen nach einem der Ansprüche 13 bis 19 umfasst, der auf der Innenfläche des Reifens auf der Innenseite der Karkasse angeordnet ist, wobei ein Abschnitt der Zusatzschicht (T), der einer radialen Breite von wenigstens 30 mm in einer Region von einem Ende des Gürtels zum Wulstabschnitt entspricht, um wenigstens 0,2 mm dicker ist als ein Abschnitt der Zusatzschicht (T), der einem Bodenabschnitt des Gürtels entspricht.

## Revendications

1. Gomme intérieure pour un bandage pneumatique, comprenant au moins une couche d'une composition de résine (R), dans laquelle une résine molle, (Q) présentant un module de Young à 23°C inférieur à celui composée du copolymère d'éthylène alcool de vinyle modifié (P) produit par réaction d'un copolymère d'un copolymère d'éthylène alcool de vinyle modifié (P), est dispersée dans une matrice d'éthylène alcool de vinyle (O), un module de Young à -20°C de la composition de résine (R) n'étant pas supérieur à 1500 MPa.

2. Gomme intérieure pour un bandage pneumatique selon la revendication 1, dans laquelle le module de Young à 23°C de la résine molle (Q) n'est pas supérieur à 500 MPa.

3. Gomme intérieure pour un bandage pneumatique selon la revendication 1, dans laquelle la résine molle (Q) comporte un groupe fonctionnel réagissant avec un groupe hydroxyle.

4. Gomme intérieure pour un bandage pneumatique selon la revendication 1, dans laquelle une teneur en éthylène du copolymère d'éthylène alcool de vinyle (O) est comprise entre 25 et 50 % en moles.

5. Gomme intérieure pour un bandage pneumatique selon la revendication 1, dans laquelle un degré de saponification de l'éthylène alcool de vinyle (O) n'est pas inférieur à 90%.

6. Gomme intérieure pour un bandage pneumatique selon la revendication 1, dans laquelle le copolymère d'éthylène alcool de vinyle modifié (P) est produit par réaction de 1 à 50 parties en poids d'un composé époxyde (S) sur la base de 100 parties en poids du copolymère (O).

7. Gomme intérieure pour un bandage pneumatique selon la revendication 6, dans laquelle le composé époxyde (S) est du glycidol ou de l'époxypropane.

8. Gomme intérieure pour un bandage pneumatique selon la revendication 1, dans laquelle une teneur en résine molle (Q) dans la composition de résine (R) est comprise dans un intervalle représentant 10 à 30% en poids.

9. Gomme intérieure pour un bandage pneumatique selon la revendication 1, dans laquelle une dimension moyenne des particules de la résine molle (Q) n'est pas supérieure à 2 µm.

10. Gomme intérieure pour un bandage pneumatique selon la revendication 1, dans laquelle la couche de la composition de résine (R) est réticulée.

11. Gomme intérieure pour un bandage pneumatique selon la revendication 1, dans laquelle la couche de la composition de résine (R) présente un coefficient de perméation à l'oxygène à 20°C et 65% d'humidité relative non supérieur à 3,0 x 10⁻¹² cm³.cm/cm²-sec.cmHg.

12. Gomme intérieure pour un bandage pneumatique selon la revendication 1, dans laquelle une épaisseur de la couche de la composition de résine (R) n'est pas supérieure à 100 µm.

13. Gomme intérieure pour un bandage pneumatique selon la revendication 1, comprenant en outre au moins une couche auxiliaire (T) composée d'un élastomère, adjacente à la couche de la composition de résine (R).

14. Gomme intérieure pour un bandage pneumatique selon la revendication 13, dans laquelle au moins une couche adhésive (U) est agencée dans au moins un emplacement entre la couche de la composition de résine (R) et la couche auxiliaire (T) et entre la couche auxiliaire (T) et la couche auxiliaire (T).

15. Gomme intérieure pour un bandage pneumatique selon la revendication 13, dans laquelle la couche auxiliaire (T) présente un coefficient de perméation à l'oxygène à 20°C et 65% d'humidité relative non supérieur à 3,0 x 10⁻⁹ cm³.cm/cm²-sec.cmHg.

16. Gomme intérieure pour un bandage pneumatique selon la revendication 13, dans laquelle la couche auxiliaire (T) comprend un caoutchouc butyle et/ou un caoutchouc butyle halogéné.

17. Gomme intérieure pour un bandage pneumatique selon la revendication 13, dans laquelle la couche auxiliaire (T) comprend un élastomère à base diénique.

18. Gomme intérieure pour un bandage pneumatique selon la revendication 13, dans laquelle la couche auxiliaire (T) comprend un élastomère à base d'uréthane thermoplastique.

19. Gomme intérieure pour un bandage pneumatique selon la revendication 13, dans laquelle une épaisseur totale de la (des) couche(s) auxiliaire(s) (T) est comprise dans un intervalle allant de 50 à 2000 µm.

20. Bandage pneumatique, comprenant une paire de parties de talon, une paire de parties de flanc, une partie de bande de roulement s'étendant en continu vers les deux parties de flanc, une carcasse s'étendant toroïdalement entre la paire de parties de talon pour renforcer ces parties, et une ceinture agencée au niveau de l'extérieur d'une partie de sommet de la carcasse, dans une direction radiale du bandage pneumatique, une gomme intérieure pour un bandage pneumatique selon l'une quelconque des revendications 1 à 19 étant agencée sur une surface interne du bandage pneumatique, au niveau de l'intérieur de la carcasse.

21. Bandage pneumatique selon la revendication 20, comprenant une gomme intérieure pour un bandage pneumatique selon l'une quelconque des revendications 13 à 19, agencée sur une surface interne du bandage pneumatique, au niveau de l'intérieur de la carcasse, une partie de la couche auxiliaire (T) correspondant à une largeur radiale d'au moins 30 mm dans une région s'étendant d'une extrémité de la ceinture vers la partie de talon, ayant une épaisseur supérieure d'au moins 0,2 mm à celle d'une partie de la couche auxiliaire (T) correspondant à une partie inférieure de la ceinture.
